# EUROPÄISCHE PATENTSCHRIFT

(11) **EP 3 973 197 B1**
(45) Veröffentlichungstag und Bekanntmachung des Hinweises auf die Patenterteilung: **14.02.2024**
(21) Anmeldenummer: 20707064.0
(22) Anmeldetag: 24.02.2020
(51) Int. Cl.: F16B 5/06, F16B 12/20

(54) **ECKBESCHLAG**
CORNER FITTING
FERRURE DE COIN

(30) Priorität: 20.05.2019 DE 202019102829 U
(43) Veröffentlichungstag der Anmeldung: 30.03.2022
(73) Patentinhaber: Häfele Berlin GmbH & Co KG, 12307 Berlin (DE)
(72) Erfinder: MERZ, Ulrich, 93059 Regensburg (DE)
(74) Vertreter: Kohler Schmid Möbus Patentanwälte
(86) Internationale Anmeldenummer: PCT/EP2020/054740
(87) Internationale Veröffentlichungsnummer: WO 2020/233845

(56) Entgegenhaltungen:
- DE-U1-202007 007 637
- DE-U1-202013 101 617

## Beschreibung

Die Erfindung betrifft einen Eckbeschlag mit einem streifenförmigen Grundkörper für eine Klemmverbindung zwischen zwei im Wesentlichen senkrecht zueinander angeordneten Möbelplatten, wobei von dem Eckbeschlag in einem Endbereich des Grundkörpers eine Lippe entlang mindestens eines Teils der Breite vorsteht und in dem gegenüberliegenden Endbereich des Grundkörpers ein Zapfen vorsteht, wobei die Lippe und der Zapfen auf der gleichen Seite des Grundkörpers in im Wesentlichen die gleiche Richtung vorstehen.

Ein solcher Eckbeschlag ist beispielsweise durch die DE 20 2013 101617 U1 oder DE 20 2007 007637 U1 bekannt geworden.

Eckbeschläge dienen zum Beispiel zum Stabilisieren von Ecken von Möbelplatten wie sie beim Aufeinandertreffen von z. B. Seitenwänden und Rückwänden von Möbeln oder Möbelteilen, wie z. B. Schubladen, entstehen.

Bei dem aus DE 20 2013 101617 U1 bekannten Eckbeschlag handelt es sich um einen Fachbodenträger, der ein Winkelstück mit einem in Montagelage vertikalen Schenkel und einem in Montagelage horizontalen Schenkel und einen Wandzapfen umfasst, der an der Außenseite des vertikalen Schenkels horizontal abstehend angeformt ist. Die Außenseiten der beiden Schenkel schließen einen Winkel zwischen ca. 85° und ca. 88° ein, und die Außenseite des vertikalen Schenkels weist unterhalb des horizontalen Wandzapfens einen Vorsprung auf, dessen Stirnseite mit der Außenseite des horizontalen Schenkels einen Winkel einschließt, der größer als der Winkel und maximal 90° ist.

Bei dem aus DE 20 2007 007637 U1 bekannten Eckbeschlag handelt es sich um einen Tablarhalter zur Abstützung eines Tablars. Der Tablarhalter hat die Form eines Winkelstücks mit zwei zueinander rechtwinkligen Schenkeln, wobei ein erster der beiden Schenkel auf seiner Außenseite mit einem hakenförmigen Vorsprung und einem davon beabstandeten ersten zapfenförmigen Vorsprung versehen ist und zur Anlage an einer Wand dient. Der zweite Schenkel dient zur Aufnahme des Tablars und erstreckt sich senkrecht von der Wand weg. Der hakenförmige Vorsprung ist im Verlauf einer Schwenkbewegung des Tablarhalters durch ein Wandloch hindurchführbar, um mit seinem freien Ende mit der vom Tablarhalter abgewandten Wandseite in Anlage zu kommen, und der erste zapfenartige Vorsprung ist am Ende der Schwenkbewegung in ein anderes Wandloch einsteckbar.

Ein Eckbeschlagsprofil, das für eine Einrastverbindung konfiguriert ist, um eine Ecke eines Möbelmoduls außen zu stabilisieren, ist aus der DE 20 2018 107 189 U1 bekannt geworden. Das Eckbeschlagsprofil besteht aus zwei Platten, die im Wesentlichen in L-Form angeordnet sind. Jede Platte weist eine Lippe auf, die von der Platte vorsteht. Die Lippen sind dazu vorgesehen, in jeweils einer Nut einer Möbelplatte einzurasten.

Der vorliegenden Erfindung liegt die Aufgabe zugrunde, einen Eckbeschlag der eingangs genannten Art insbesondere hinsichtlich einfacherer Handhabbarkeit sowie einfacherer und schnellerer Montierbarkeit zu verbessern.

Diese Aufgabe wird durch einen Eckbeschlag mit den Merkmalen des Anspruchs 1 gelöst. Die abhängigen Ansprüche betreffen vorteilhafte Weiterbildungen des erfindungsgemäßen Beschlags.

Erfindungsgemäß gibt der gebogene Teil dem streifenförmigen Grundkörper eine ergonomische Formgebung, welche das Eindrücken des Zapfens, z. B. mit dem Daumen, in eine Ausnehmung eines Möbelteils unterstützt. Zugleich hat die gebogene Form eine federnde Eigenschaft, womit der Eckbeschlag in verbautem Zustand unter Spannung gesetzt werden kann und wodurch eine feste Verbindungswirkung erreicht werden kann. Durch eine solche Ausbildung des Eckbeschlags ist eine handliche Ausführung des Eckbeschlags bei zugleich leichter Montierbarkeit und stabiler Verbindung möglich. Die Lippe kann beispielsweise eine Möbelplatte hinten umgreifen und der Zapfen zum Verspannen in eine Ausnehmung, z. B. Bohrung, der zweiten Möbelplatte eingefügt werden. Dieses Einfügen kann beispielsweise werkzeuglos durch Drücken mit einem Finger erfolgen.

In einer vorteilhaften Ausführungsform ist der Eckbeschlag einstückig, bevorzugt aus elastischem Material, ausgeführt. Durch die einstückige Ausführung kann besonders in Verbindung mit dem elastischen Material eine federnde Eigenschaft erreicht werden, womit der Eckbeschlag im verbauten Zustand unter Spannung gesetzt werden kann und somit eine feste Verbindungswirkung erreicht werden kann.

In einer Ausführungsform der Erfindung bildet die dem Zapfen zugewandte Seite der Lippe mit dem Grundkörper einen spitzen Winkel, d. h. einen Winkel kleiner als 90°. Dieser spitze Winkel zwischen Lippe und Grundkörper kann im verbauten Zustand aufgeweitet werden, d. h. größer werden, sich den 90° annähern oder u. U. größer als 90° werden. Hierdurch kann Verklemmung des Eckbeschlags im verbauten Zustand und somit eine feste Verbindungswirkung erreicht werden.

Bevorzugt ist der gebogene Teil zu der Seite des Grundkörpers gebogen, von der die Lippe und der Zapfen vorstehen. Der Zapfen ist beispielsweise als Hohlzapfen ausgeführt und/oder weist als Querschnitte einen offenen Ring auf. Diese Merkmale geben dem Zapfen einzeln oder in Kombination eine gewisse Elastizität und ermöglichen ein Komprimieren, so dass das Einführen in eine Ausnehmung, z. B. Bohrung, erleichtert wird. Eine Verspannung des Eckbeschlags im montierten Zustand wird hierdurch ebenfalls erleichtert.

Die Öffnung des Zapfens kann sich beispielsweise auf der von der Lippe abgewandten Seite des Zapfens befinden. Dies ist vorteilhaft, da so die der Lippe zugewandte Seite des Zapfens zur Verfügung stehen kann, um ein Verklemmen des Eckbeschlags im montierten Zustand zu unterstützen.

Zur besseren Montierbarkeit und zur Verbesserung der Verankerung des Zapfens in einer Ausnehmung kann der Zapfen an seiner Außenseite axial verlaufende Einschnitte oder Stege aufweisen. Hierdurch kann die Handhabbarkeit und Montierbarkeit weiter verbessert werden.

Insbesondere durch Anbringen von zahnförmigen, in Umfangsrichtung des Zapfens verlaufenden, Einschnitten an einem Steg auf der der Lippe zugewandten Seite des Zapfens kann eine Verankerung des Zapfens in der Ausnehmung erreicht werden. Hierfür ist eine Form der Einschnitte vorteilhaft, die in Einführrichtung schräge Ebenen vorsehen, die das Einführen unterstützen und in der Gegenrichtung als Widerhaken wirken.

Bevorzugt verjüngt sich der Zapfen konisch in seinem Verlauf weg vom Grundkörper, d.h. sein Außendurchmesser wird Entfernung zum Grundkörper kleiner. Beispielsweise weist der Zapfen in dem Bereich mit dem er an den Grundkörper anschließt einen Außendurchmesser von mehr als 5 mm auf. Dieser Außendurchmesser wird dann im Verlauf der konischen Verjüngung kleiner. Diese Ausführungsform ermöglicht ein leichteres Einführen des Zapfens in eine Ausnehmung eines Möbelteils und vereinfacht so die Montierbarkeit und Handhabbarkeit.

Die Erfindung betrifft in einem weiteren Aspekt auch ein Möbelmodul zur Bildung eines Teils eines Möbelstücks mit einem erfindungsgemäßen Eckbeschlag. Das Möbelmodul umfasst dabei zwei im Wesentlichen zueinander senkrecht angeordnete Möbelplatten, wobei eine erste Möbelplatte in eine Nut einer zweiten Möbelplatte angeordnet ist. Der Zapfen des Eckbeschlags ist in eine Ausnehmung der ersten Möbelplatte eingefügt und die Lippe hintergreift die zweite Möbelplatte auf der Außenseite. Die Ausnehmung der ersten Möbelplatte ist dabei bevorzugt eine Bohrung mit einer dem Zapfen angepassten Durchmesser, beispielsweise mit einem Durchmesser zwischen 1 und 10 mm, bevorzugt zwischen 4 mm und 6 mm, ganz bevorzugt ca. 5 mm. Die Bohrung ist bevorzugt zwischen 10 mm und 30 mm, ganz bevorzugt ca. 24 mm, von der Außenseite der zweiten Möbelplatte angeordnet.

Bevorzugt ist die erste Möbelplatte eine Rückwand einer Schublade und die zweite Möbelplatte eine Seitenwand einer Schublade. Bei höheren Schubkästen, z. B. ab einer Höhe von 100 mm, können auch mehrere erfindungsgemäße Eckbeschläge übereinander eingesetzt werden, um die Stabilität zu verbessern.

Weitere Vorteile der Erfindung ergeben sich aus der Beschreibung, den Ansprüchen und der Zeichnung. Ebenso können die vorstehenden genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: den erfindungsgemäßen Eckbeschlag in einer Seitenansicht;
- Fig. 2: eine Schnittansicht durch den Eckbeschlag entlang der Linie A-A
- Fig. 3: eine perspektivische Ansicht des Eckbeschlags;
- Fig. 4: eine schematische Ansicht eines Möbelmoduls;
- Fig. 5: eine schematische Darstellung eines Möbelmoduls mit Eckbeschlag.

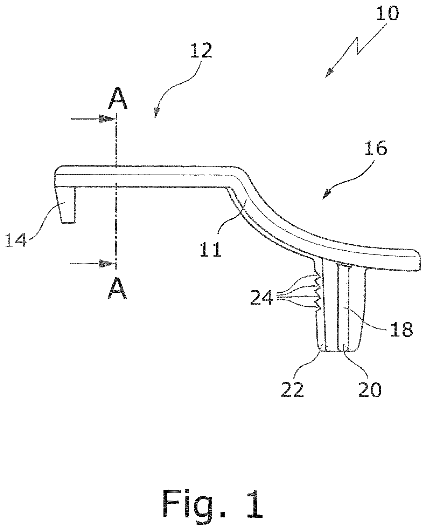

**Fig. 1** zeigt eine Seitenansicht eines Eckbeschlags **10** mit einem streifenförmigen Grundkörper **11.** Der Grundkörper 11 weist einen geraden Teil **12** auf, an dessen Ende eine Lippe **14** vorsteht. An der der Lippe 14 gegenüberliegenden Seite des geraden Teils 12 schließt sich ein gebogener Teil **16** des Grundkörpers 11 an. Von dem gebogenen Teil 16 des Grundkörpers 11 steht ein Zapfen **18** vor. Der Zapfen weist in axialer Richtung verlaufende Stege **20, 22** auf. Der der Lippe 14 zugewandte Steg 22 weist in Umfangsrichtung des Zapfens verlaufende Einkerbungen **24** auf, die zahnförmig sind und durch ihre Form als Widerhaken wirken können.

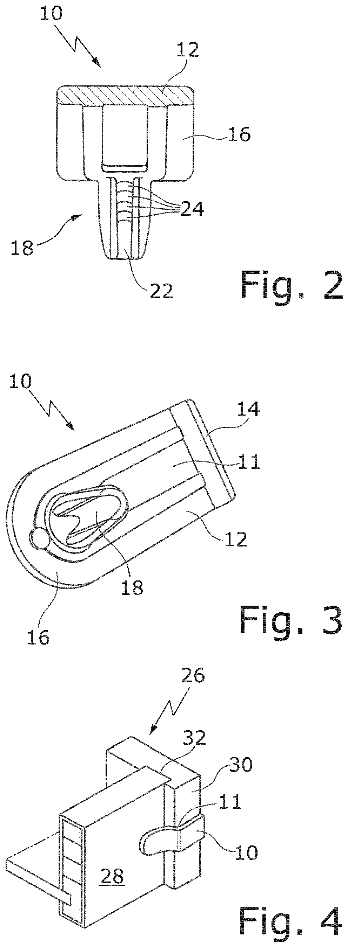

**Fig. 2** zeigt eine Schnittansicht durch den Eckbeschlag 10 entlang der Linie A-A aus Fig. 1. An den geraden Teil 12 schließt sich der gebogene Teil 16 an, von dem der Zapfen 18 vorsteht, dessen Steg 22 in Umfangsrichtung verlaufende Einkerbungen 24 aufweist.

In der perspektivischen Darstellung des Eckbeschlags 10 von **Fig. 3** ist die offene Form des Zapfens 18 dargestellt, der von dem gebogenen Teil 16 des Grundkörpers 11 vorsteht. Von dem geraden Teil 12 des Grundkörpers 11 steht die Lippe 14 vor. Die Öffnung des Zapfens 18 befindet sich auf der von der Lippe 14 abgewandten Seite des Zapfens 18.

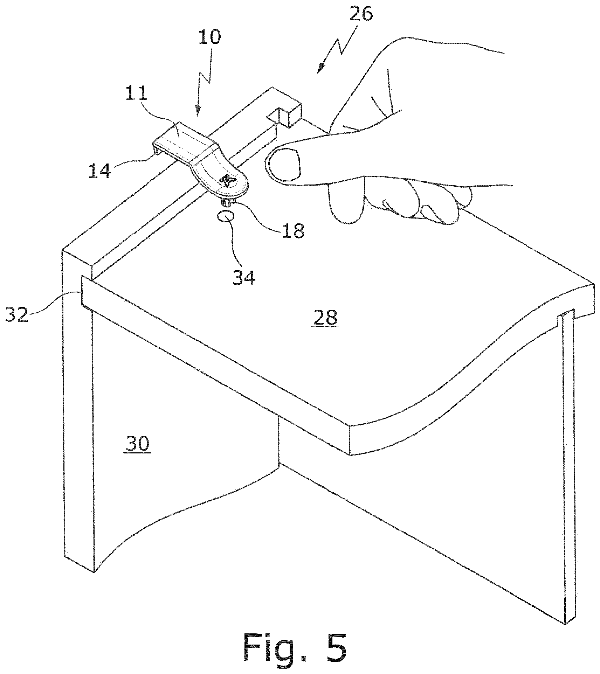

**Fig. 4** zeigt ein Möbelmodul **26** zur Bildung eines Teils eines Möbelstücks. Eine erste Eckplatte **28,** z. B. eine Rückwand einer Schublade, ist senkrecht zu einer zweiten Möbelwand **30,** z. B. einer Seitenwand einer Schublade, angeordnet. Die erste Möbelplatte ist dabei in einer Nut **32** der zweiten Möbelplatte angeordnet. Der Eckbeschlag 10 mit seinem streifenförmigen Grundkörper dient in diesem Beispiel als Rückwandverbinder z. B. eines Schubkastens, bei dem die Lippe 14 (Fig. 5) des Eckbeschlags 10 die äußere hintere Kante der zweiten Möbelplatte umgreift und der Zapfen 18 (Fig. 5) des Eckbeschlags 10 in eine Bohrung 34 (Fig. 5) der ersten Seitenwand eingeführt ist. In der schematischen Darstellung von Fig. 4 ist eine hintere Ecke eines solchen Schubkastens dargestellt, der Eckverbinder 10 kann bevorzugt in gleicher Weise als Rückwandverbinder für die andere hintere Ecke des Schubkastens eingesetzt werden. Bevorzugt ist hierfür die Rückwand des Schubkastens in beide Seitenwände, auch Seitenzargen genannt, des Schubkastens eingenutet.

In **Fig. 5** ist schematisch dargestellt, wie zur Montage der Eckbeschlag mit den Möbelplatten verbunden werden kann. Hierfür kann die Lippe 14 des Eckbeschlags 10 bevorzugt an die Kante der Seitenwand 30 eingehängt werden und anschließend mit Fingerdruck auf den gebogenen Teil 16 in einer Bohrung **34** der Rückwand 28 fixiert werden. Die bevorzugte Formgebung des Eckbeschlags bewirkt dabei ein federndes Spannen und ermöglicht eine feste und - falls gewünscht - dauerhafte Verbindung, die jedoch bei Bedarf gelöst werden kann.

### Bezugszeichenliste

- 10: Eckbeschlag
- 11: Grundkörper
- 12: gerader Teil
- 14: Lippe
- 16: gebogener Teil
- 18: Zapfen
- 20: Steg
- 22: Steg
- 24: Einschnitt
- 26: Möbelmodul
- 28: erste Möbelplatte
- 30: zweite Möbelplatte
- 32: Nut
- 34: Bohrung

## Patentansprüche

1. Eckbeschlag (10) mit einem streifenförmigen Grundkörper (11) für eine Klemmverbindung zwischen zwei im Wesentlichen senkrecht zueinander angeordneten Möbelplatten (28, 30), wobei von dem Eckbeschlag in einem Endbereich des Grundkörpers (11) eine Lippe (14) entlang mindestens eines Teils der Breite vorsteht und in dem gegenüberliegenden Endbereich des Grundkörpers (11) ein Zapfen (18) vorsteht, wobei die Lippe (14) und der Zapfen (18) auf der gleichen Seite des Grundkörpers (11) in im Wesentlichen die gleiche Richtung vorstehen,
**dadurch gekennzeichnet,**
**dass** der Grundkörper (11) einen geraden Teil (12) und einen gebogenen Teil (16) aufweist, wobei die Lippe von dem geraden Teil (12) vorsteht und der Zapfen (18) von dem gebogenen Teil (16) vorsteht und der gebogene Teil sich an der der Lippe (14) gegenüberliegenden Seite an den geraden Teil (12) anschließt.

2. Eckbeschlag nach Anspruch 1, **dadurch gekennzeichnet, dass** der Eckbeschlag (10) einstückig aus einem elastischen Material, insbesondere Metall oder Kunststoff, ausgebildet ist.

3. Eckbeschlag nach Anspruch 1 oder 2, **dadurch gekennzeichnet, dass** die dem Zapfen (18) zugewandte Seite der Lippe (14) mit dem Grundkörper (11) einen spitzen Winkel bildet.

4. Eckbeschlag nach einem der vorhergehenden Ansprüche, **dadurch gekennzeichnet, dass** der gebogene Teil in der Richtung gebogen ist, in der die Lippe (14) und der Zapfen (18) vorstehen.

5. Eckbeschlag nach einem der vorhergehenden Ansprüche, **dadurch gekennzeichnet, dass** der Zapfen (18) in einer Richtung von dem gebogenen Teil (16) vorsteht, die senkrecht zum geraden Teil (12) verläuft.

6. Eckbeschlag nach einem der vorhergehenden Ansprüche, **dadurch gekennzeichnet, dass** der Zapfen (18) als Hohlzapfen ausgeführt ist.

7. Eckbeschlag nach Anspruch 6, **dadurch gekennzeichnet, dass** der Zapfen (18) als Querschnitt einen offenen Ring aufweist.

8. Eckbeschlag nach einem der vorhergehenden Ansprüche, **dadurch gekennzeichnet, dass** sich der Zapfen (18) in seinem Verlauf weg vom Grundkörper (11) konisch verjüngt.

9. Eckbeschlag nach einem der vorhergehenden Ansprüche, **dadurch gekennzeichnet, dass** der Zapfen (18) an seiner Außenseite axial verlaufende Einschnitte oder Stege (20, 22) aufweist.

10. Eckbeschlag nach Anspruch 9, **dadurch gekennzeichnet, dass** ein der Lippe zugewandter Steg (22) in Umfangsrichtung des Zapfens verlaufende zahnförmige Einschnitte (24) aufweist.

11. Möbelmodul (26) zur Bildung eines Teils eines Möbelstücks, umfassend einen Eckbeschlag (10) gemäß einem der vorhergehenden Ansprüche sowie eine erste Möbelplatte (28) und eine zweite Möbelplatte (30), wobei die Möbelplatten (28, 30) im Wesentlichen senkrecht zueinander angeordnet sind und die erste Möbelplatte (28) in eine Nut (32) der zweiten Möbelplatte (30) eingefügt ist, der Zapfen (18) des Eckbeschlags (10) in eine Ausnehmung der ersten Möbelplatte eingefügt ist und die Lippe (14) die zweite Möbelplatte (30) außen hintergreift.

12. Möbelmodul nach Anspruch 11, **dadurch gekennzeichnet, dass** die erste Möbelplatte eine Rückwand einer Schublade und die zweite Möbelplatte eine Seitenwand der Schublade ist.

## Claims

1. A corner fitting (10) comprising a strip-like base member (11) for a clamping connection between two furniture panels (28, 30) which are arranged substantially perpendicularly to each other, wherein a lip (14) protrudes from the corner fitting in an end region of the base member (11) along at least a portion of the width and a pin (18) protrudes in the opposing end region of the base member (11), wherein the lip (14) and the pin (18) protrude at the same side of the base member (11) substantially in the same direction, **characterized in that** the base member (11) comprises a linear portion (12) and a bent portion (16), wherein the lip protrudes from the linear portion (12) and the pin (18) protrudes from the bent portion (16) and the bent portion adjoins the linear portion (12) at the side opposite the lip (14).

2. The corner fitting as claimed in claim 1, **characterized in that** the corner fitting (10) is formed integrally from a resilient material, in particular metal or plastics material.

3. The corner fitting as claimed in claim 1 or 2, **characterized in that** the side of the lip (14) facing the pin (18) forms an acute angle with the base member (11).

4. The corner fitting as claimed in one of the preceding claims, **characterized in that** the bent portion is bent in the direction in which the lip (14) and the pin (18) protrude.

5. The corner fitting as claimed in one of the preceding claims, **characterized in that** the pin (18) protrudes from the bent portion (16) in a direction which extends perpendicularly to the linear portion (12).

6. The corner fitting as claimed in one of the preceding claims, **characterized in that** the pin (18) is configured as a hollow pin.

7. The corner fitting as claimed in claim 6, **characterized in that** the pin (18) has an open ring as a cross section.

8. The corner fitting as claimed in one of the preceding claims, **characterized in that** the pin (18) tapers conically in its extent away from the base member (11).

9. The corner fitting as claimed in one of the preceding claims, **characterized in that** the pin (18) has at the outer side thereof axially extending indentations or webs (20, 22).

10. The corner fitting as claimed in claim 9, **characterized in that** a web (22) which faces the lip has tooth-like indentations (24) which extend in the circumferential direction of the pin.

11. A furniture module (26) for forming a portion of an item of furniture, comprising a corner fitting (10) as claimed in one of the preceding claims and a first furniture panel (28) and a second furniture panel (30), wherein the furniture panels (28, 30) are arranged substantially perpendicularly to each other and the first furniture panel (28) is inserted into a groove (32) of the second furniture panel (30), the pin (18) of the corner fitting (10) is inserted into a recess of the first furniture panel and the lip (14) engages behind the second furniture panel (30) at the outer side.

12. The furniture module as claimed in claim 11, **characterized in that** the first furniture panel is a rear wall of a drawer and the second furniture panel is a side wall of the drawer.

## Revendications

1. Ferrure d'angle (10) munie d'un corps de base (11) en forme de bande, dévolu à une liaison par serrage entre deux panneaux (28, 30) de meuble agencés, pour l'essentiel, perpendiculairement l'un à l'autre, sachant qu'une lèvre (14) fait saillie au-delà de la ferrure d'angle le long d'au moins une partie de la largeur, dans une région extrême du corps de base (11), et qu'un tenon (18) fait saillie dans la région extrême dudit corps de base (11) située à l'opposé, ladite lèvre (14) et ledit tenon (18) faisant saillie du même côté dudit corps de base (11), substantiellement dans la même direction,
**caractérisée par le fait**
**que** le corps de base (11) comprend une partie rectiligne (12) et une partie courbe (16), la lèvre dépassant au-delà de la partie rectiligne (12), le tenon (18) dépassant au-delà de la partie courbe (16), et ladite partie courbe se rattachant à ladite partie rectiligne (12) du côté tourné à l'opposé de ladite lèvre (14).

2. Ferrure d'angle selon la revendication 1, **caractérisée par le fait que** ladite ferrure d'angle (10) est réalisée d'une seule pièce en un matériau élastique, notamment en métal ou en matière plastique.

3. Ferrure d'angle selon la revendication 1 ou 2, **caractérisée par le fait que** le côté de la lèvre (14) qui est tourné vers le tenon (18) forme un angle aigu avec le corps de base (11).

4. Ferrure d'angle selon l'une des revendications précédentes, **caractérisée par le fait que** la partie courbe est arquée dans la direction dans laquelle la lèvre (14) et le tenon (18) font saillie.

5. Ferrure d'angle selon l'une des revendications précédentes, **caractérisée par le fait que** le tenon (18) fait saillie, au-delà de la partie courbe (16), dans une direction s'étendant perpendiculairement à la partie rectiligne (12).

6. Ferrure d'angle selon l'une des revendications précédentes, **caractérisée par le fait que** le tenon (18) est réalisé sous la forme d'un tenon creux.

7. Ferrure d'angle selon la revendication 6, **caractérisée par le fait que** la section transversale du tenon (18) se présente comme un anneau ouvert.

8. Ferrure d'angle selon l'une des revendications précédentes, **caractérisée par le fait que** le profil du tenon (18) s'amenuise tronconiquement en s'éloignant du corps de base (11).

9. Ferrure d'angle selon l'une des revendications précédentes, **caractérisée par le fait que** le tenon (18) est doté d'entailles ou de membrures (20, 22) qui s'étendent axialement sur sa face extérieure.

10. Ferrure d'angle selon la revendication 9, **caractérisée par le fait qu'**une membrure (22), tournée vers la lèvre, comporte des entailles (24) en forme de dents qui s'étendent dans la direction du pourtour du tenon.

11. Module de meuble (26) conçu pour former une partie d'un article d'ameublement, comprenant une ferrure d'angle (10) conforme à l'une des revendications précédentes, ainsi qu'un premier panneau (28) de meuble et un second panneau (30) de meuble, sachant que lesdits panneaux (28, 30) du meuble sont agencés pour l'essentiel perpendiculairement l'un à l'autre, que le premier panneau (28) du meuble est inséré dans une rainure (32) du second panneau (30) dudit meuble, que le tenon (18) de ladite ferrure d'angle (10) est inséré dans un évidement dudit premier panneau du meuble, et que la lèvre (14) emprisonne extérieurement, par-derrière, ledit second panneau (30) dudit meuble.

12. Module de meuble selon la revendication 11, **caractérisé par le fait que** le premier panneau de meuble est une paroi postérieure d'un tiroir et le second panneau de meuble est une paroi latérale dudit tiroir.
